(19)

Europäisches
Patentamt
European
Patent Office
Office européen
des brevets

(11) **EP 2 825 849 B1**

(12) **EUROPEAN PATENT SPECIFICATION**

(45) Date of publication and mention
of the grant of the patent:
**20.04.2016 Bulletin 2016/16**

(51) Int Cl.:
**G01C 21/34** *(2006.01)* **G06Q 10/04** *(2012.01)*
**G08G 1/00** *(2006.01)*

(21) Application number: **13712153.9**

(86) International application number:
**PCT/EP2013/053742**

(22) Date of filing: **25.02.2013**

(87) International publication number:
**WO 2014/127849 (28.08.2014 Gazette 2014/35)**

(54) **METHOD AND SYSTEM FOR DETERMINING ROUTES OF VEHICLES**

VERFAHREN UND SYSTEM ZUM FESTLEGEN VON FAHRZEUGROUTEN

PROCÉDÉ ET SYSTÈME POUR DÉTERMINER DES ITINÉRAIRES DE VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.01.2015 Bulletin 2015/04**

(73) Proprietor: **NEC Corporation
Tokyo 108-8001 (JP)**

(72) Inventors:
• **ALESIANI, Francesco**
**69121 Heidelberg (DE)**
• **MASLEKAR, Nitin**
**69123 Heidelberg (DE)**

(74) Representative: **Patent- und Rechtsanwälte
Ullrich & Naumann
PartG mbB
Schneidmuehlstrasse 21
69115 Heidelberg (DE)**

(56) References cited:
**JP-A- 2012 002 778 US-A1- 2011 288 765**

• **O. WORLEY; D. KLABJAN; T. SWEDA:
"Simultaneous vehicle routing and charging
station siting for commercial electric vehicles",
ELECTRIC VEHICLE CONFERENCE (IEVC), 2012
IEEE INTERNATIONAL, IEEE, 2012, pages 1-3,
XP002716475, cited in the application**
• **UMAIR F SIDDIQI ET AL: "Multi constrained Route
Optimization for Electric Vehicles using SimE",
SOFT COMPUTING AND PATTERN
RECOGNITION (SOCPAR), 2011
INTERNATIONAL CONFERENCE OF, IEEE, 14
October 2011 (2011-10-14), pages 376-383,
XP032028255, DOI:
10.1109/SOCPAR.2011.6089273 ISBN:
978-1-4577-1195-4**

**Description**

The present invention relates to a method for determining routes of vehicles, preferably electric vehicles.

The present invention also relates to a system for determining routes of vehicles, preferably for performing with a method according to one of the claims 1-14.

Although applicable to vehicles in general, the present invention will be described with regard to electric vehicles.

Although applicable to parameters in general, the present invention will be described with regard to a parameter representing cost of transport. The term "cost" with regard to the present invention is to be understood in a general way. In particular the term "cost" refers not only to monetary cost.

Recently more and more vehicle fleet providers like taxi services or urban delivery companies are using respectively integrating electric vehicles in their vehicle fleet. Costs for their acquisition and the maintenance of the batteries of the electric vehicles are one of the crucial aspects when considering an acquisition of an electric vehicle. Further due to the - compared with combustion vehicles - limited cruising range, the longer recharge times (compared to refueling time in case of combustion vehicles), there is a great need for determining routes of vehicles taking into account at least these aspects.

In the document US 2012/0233077 A1 an electric charging station reservation system and a corresponding method is described. The method for reserving an electric charging station for a vehicle having a controller and a battery comprises the steps of receiving, by a server, a desired destination from a client device, verifying the availability of a designated charging station at an expected arrival time of the vehicle at the desired destination; reserving, via the server, the designated charging station when the designated charging station is available at the expected arrival time, receiving information from the controller using the server, including a state of charge and a temperature of the battery, generating an electronic token via the server, wherein the token uniquely identifies the vehicle, and transmitting the electronic token from the server to the client device, wherein the token confirms the reservation and prevents unauthorized use of the designated charging station by another vehicle.

In the document US 2012/0109519 A1 a system and a method to route battery electric vehicles to a charging station is described and a navigation device and the method for route calculation is used. The navigation system is operative to obtain charging station data from a data store to determine at least one selected charging station having charging equipment that is compatible with the vehicle and is currently available or expected to be available for charging the vehicle based at least in part on the charging station data and on a present state of charge value indicating a remaining amount of energy stored in the battery and to determine a route for the vehicle extending from a current vehicle location to a destination location corresponding to the at least one selected charging station based at least in part on the charging station data and on the present state of charge value.

In the document US 2012/0089329 A1 a navigation system for an electric vehicle and navigation service method thereof is described. The navigation system for an electric vehicle comprising a data communication unit configured to communicate with a navigation terminal, a database configured to store map information, transportation information, charging station information, and electric vehicle inaccessible road information; and a path search unit wherein, upon receiving a navigation request signal from the data communication unit, the path search unit searches for at least one traveling path composed of only roads where traveling of the electric vehicle is possible using the information stored in the database, and transmitting information about the found traveling path to the navigation terminal.

Further routing methods are described In the non-patent literature of M. Sachenbacher, M. Leucker, A. Artmeier and J. Haselmayr "Efficient energy-optimal routing for electric vehicles", in AAAI, 2011, and in the non-patent literature of O. Worley, D. Klabjan and T. Sweda "Simultaneous vehicle routing and charging station siting for commercial electric vehicles" in Electric Vehicle Conference (IEVC), 2012 IEEE International, IEEE, 2012, pp. 1-3.

However, the determined routes for the vehicles in these documents have certain drawbacks. One of the drawbacks is that a long waiting time for a vehicle at a charging station may arise increasing unnecessarily the travel time for a vehicle. A further drawback is that the announced charging stops may be too frequent without using the capacity of the battery of an electric vehicle in an optimal way.

It is therefore an objective of the present invention to provide a method and a system for determining routes of vehicles which provides a more optimal drive range, more optimal charging stops and reduced waiting time along the route for a plurality of vehicles.

It is a further objective of the present invention to provide a method and a system for determining routes of vehicles which is more flexible in particular by taking into account more constraints of interest.

The aforementioned objectives are accomplished by a method of claim 1 and a system of claim 15.

According to the invention it has been recognized that the method and the system for determining routes of vehicles may take a plurality of constraints into account while at the same time being fast and reliable.

According to the invention it has been recognized that the method and the system for determining routes of vehicles provide optimized routes of the vehicles.

According to the invention it has further been recognized that that the method and the system for determining routes of vehicles are easy to implement and further easy to upgrade or expand to further parameters and/or generation methods as well as evaluation procedures.

An evaluation procedure based on one or more parameters includes an evaluation against a function depending on the one or more parameters. Trips are meant to have a start-point respectively origin and an end-point respectively destination and possibly fix via/intermediate points. Road segments and route segments also have a start-point and an end-point related to the corresponding segment.

The term "vehicle" according to the invention refers to vehicles in general, preferably range limited vehicles, in particular electric vehicles.

According to the invention it has further been recognized that a driving range for a vehicle, preferably an electric vehicle, with optimal charging stops and a minimized waiting time along the route to the destination is enabled. Further features, advantages and preferred embodiments are described in the following subclaims.

According to a preferred embodiment a probability for selecting a generation method according to step d) is increased based on the result of the comparison. If for example the new routes generated with a certain generation method are found "better" in terms of the one or more parameters the probability for this generation method is increased so that a selection of this generation method producing routes being more optimal is more likely. This reduces for example the number of iterations to generate optimal routes fulfilling the one ore more final criteria.

According to a further preferred embodiment the new route is modified, preferably randomly, after generating the new route. Modifying the new route, preferably randomly enables visiting new part of the route space or route space for the routes along with a further optimization with regard to one or more parameters.

According to a further preferred embodiment the new route is modified by adding, removing and/or substituting route network segments and/or charging stations. This enables a simple while fast modification to generate mutations of a generated route. The modification action, i.e. adding, removing and/or substituting may be performed randomly, but the application of the selected action may be performed only, if for example certain constraints are fulfilled, for example the modified route is still feasible.

According to a further embodiment the new route is modified in a given vicinity of a start-or end-point of a road segment. This provides a restricted modification without losing flexibility or having too many modifications resulting in a completely new route. Further the modification and the given vicinity restricts possible new routes therefore providing a fast modification and later evaluation according to the one or more parameters.

According to a further preferred embodiment the modified new routes are improved according to one or more parameters. For example the new routes may be improved with respect to travel costs of the electric vehicle taking into account the provided characteristics. This enables for example a further local optimization of the new route according to one or more parameters.

According to a further preferred embodiment the prior generated routes are selected according to a probability distribution, preferably a uniform distribution or distribution based on evaluated prior routes. This reduces errors due to a false selection of the prior generated routes. If for example certain prior generated routes have a higher probability, i.e. provide a better correspondence to the one or more parameters, new routes based on already more optimized routes enable a more suitable startpoint and a faster determination respectively generation of new routes based on the prior generated routes. Uniform distribution as probability distribution may be used for initial route generation, i.e. if no prior generated routes exist. The distribution based on evaluated prior routes may be in particular be used if prior generated routes which have been evaluated already exist. Of course, both probability distributions may be used without further restriction.

According to a further preferred embodiment a new route is generated by randomly selecting one of the prior generated routes. By randomly selecting one of the prior generated routes the new route could be generated in a fast an efficient way.

According to a further preferred embodiment a new route is generated by combining one or more route segments of different generated routes. This enables for example a so-called vertical route segmentation, wherein different route segments of different generated routes are combined. For example for each route or trip a set of route segments, preferably comprising charging stations is split into a number of partitions and for each partition a predecessor route segment is assigned. Then for example a new route is created comprising the route built of a charging station visited by an i-th predecessor route segment in an i-th charging station partition.

According to a further preferred embodiment the one or more route segments of the different generated routes are based on an evaluation according the one or more parameters. This enables finding more quickly an optimized final route according to the one or more parameters since the one or more route segments of the different generated routes have already been evaluated with regard to the one or more parameters.

According to a further preferred embodiment one or more route constraints are defined and based on a higher number of fulfilled constraints the one or more route segments are selected for combining. This even further enables finding an optimal route for the vehicles not only with regard to the one or more parameters but also with regard to the number of fulfilled constraints.

According to a further preferred embodiment the result of an evaluation according to the one or more parameters for selecting the one or more route segments for combining is estimated by iterating prior generated routes and trip within one route. This enhances flexibility since for example a route that either minimizes one or more of the parameters or may fulfill a higher number of constraints may be selected or chosen.

According to a further preferred embodiment the route network is provided in form of a restricted network, preferably based on maximum distances among charging stations and/or a maximum number of charging stations ordered by their distance. This provides a network wherein the charging stations are connected only if their distance is within some predefined values and/or charging stations are connected up to a maximum number of charging stations ordered by their distances. Further the route network in form the restricted network may be based on reciprocal distances. A connection is maintained between two nodes u and w only if the squared distance d between u and w is greater than the sum of the squared distance between u and a third node v and the squared distance of the node v and node w:

$$w \in N(u) \iff d^2(u,w) \leq d^2(u,v) + d^2(v,w), \forall v \in N(u)$$

According to a further preferred embodiment the vehicles are provided in form of electric and/or combustion vehicles and wherein charging stations are provided in form of an electric charging station and/or a gas station. This enables to include a plurality of different types of vehicles providing enhanced flexibility of the method.

According to a further preferred embodiment for dynamic route request (I) a time interval for the optimal routes to be valid is predetermined and after that time interval new optimal routes are determined by performing at least steps e)-i) or (II) one or more prior generated routes are included preferably with a reduced evaluation result. This enables a more realistic implementation for example for fleet owners: Route requests may arrive in different time instances or vary over time. Group requests inside a common time interval, for example in a period of ten minutes can be handled. Further previously computed routes can be considered by assigning for example more costs to change them. There are several ways how to design and further develop the teaching of the present invention in an advantageous way. To this end it is to be referred to the patent claims subordinate to patent claim 1 on the one hand and to the following explanation of preferred embodiments of the invention by way of example, illustrated by the figures on the other hand. In connection with the explanation of the preferred embodiments of the invention by the aid of the figures, generally preferred embodiments and further developments of the teaching will we explained.

In the drawings

Fig. 1  shows a road network and a charging network with routes for electric vehicles;

Fig. 2  shows a system according to a first embodiment of the present invention;

Fig. 3  shows a method according to a second embodiment of the present invention;

Fig. 4  shows a method according to a third embodiment of the present invention;

Fig. 5a, 5b  shows part of a method according to a fourth embodiment of the present invention;

Fig. 6  shows part of a method according to a fifth embodiment of the present invention;

Fig. 7  shows part of a method according to a sixth embodiment of the present invention;

Fig. 8  shows part of a method according to a seventh embodiment of the present invention;

Fig. 9  shows schematically a route network with numbered interconnection points between route segments according to an eight embodiment of the present invention;

Fig. 10  shows a further route network according to a ninth embodiment of the present invention;

Fig. 11  shows a three dimensional representation of a route network according to Fig. 1 with the Z coordinate being a cost parameter;

Fig. 12  shows a percentage of violation over iterations diagram for three different generation methods;

Fig. 13        shows the maximum value for different initial populations according to Fig. 12;

Fig. 14        shows two indicators/parameters for a first population size and

Fig. 15        shows the two indicators/parameters for a second population size.

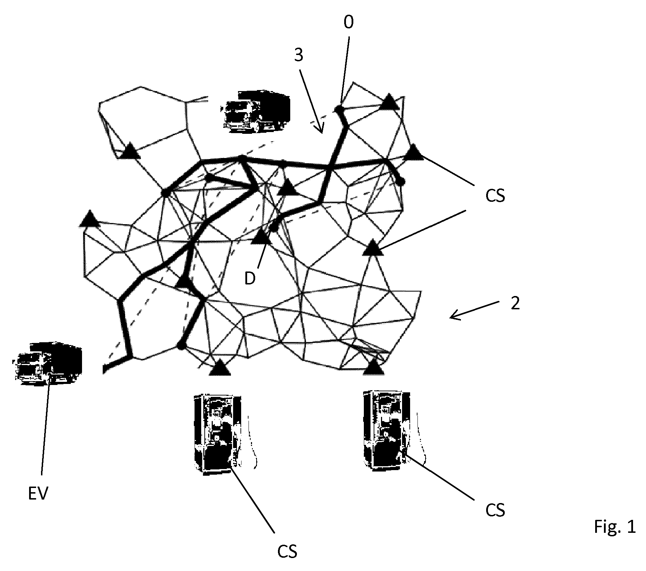

Fig. 1 shows a road network and a charging network with routes for electric vehicles.

In Fig. 1 a representation of routes 3 and charging stations CS is shown. The routes 3 are composed of different route segments connecting waypoints between origins O and destinations D of electric vehicles EV. The bold lines show the travelling routes respectively routes of the electric vehicles EV from their origins O to their destinations D.

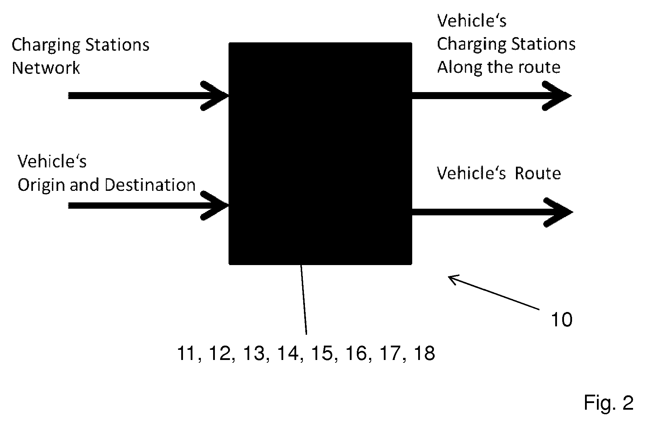

Fig. 2 shows a system according to a first embodiment of the present invention.

In Fig. 2 a system 10 is shown with input means 11 for inputting characteristics of charging stations CS, a number of vehicles EV and their respective start- and end-points O, D, with network generation means 12 for generating a road network 2 for the vehicles EV and a charging station network for the charging stations CS along points in the road network 2, with route generation means 13 for generating an initial route for each vehicle EV from the respective start-point O to the end-point D via the road network 2 and/or via the charging station network, and for generating a new route for a vehicle EV based on one or more prior generated routes for the vehicle EV according to the selected generation method, with selecting means 14 for selecting a generation method for generating routes O, D for the vehicles EV, with evaluating means 15 for evaluating the generated new route according to one or more parameters, with comparing means 16 for comparing the evaluated route with prior generated routes, with modifying means 17 for replacing one or prior generated routes with the evaluated route according to a result of the comparison and with checking means 18 for checking if the new routes satisfy one or more final criteria and if yes, defining the new routes as being optimal routes for the vehicles EV.

Input parameters for the input means are the charging station network, i.e. the location of the charging stations within the road network and the respective origins and destinations of the vehicles. Further characteristics of the electric vehicles, for example the limited battery capacity and also charging station characteristics like the limited power capacity are also used as input for the system 10. The system 10 outputs an optimal route for the vehicles along the charging station, i.e. assigns the different vehicles to different charging stations along their routes. The system 10 recognizes some constraints when outputting optimal routes: The limited battery capacity of each electric vehicle, the limited charging station capacity with regard to power capacity as well as occupy capacity. A further constraint may be the limited number of charging stations per route when optimizing the vehicles route respectively the vehicle charging stations along the route, a combination of waiting time at the different charging stations, the overall travelling time, the energy efficiency of the route and distance as well as a balancing among the charging stations, i.e. that a homogeneous use of the different charging stations is preferred.

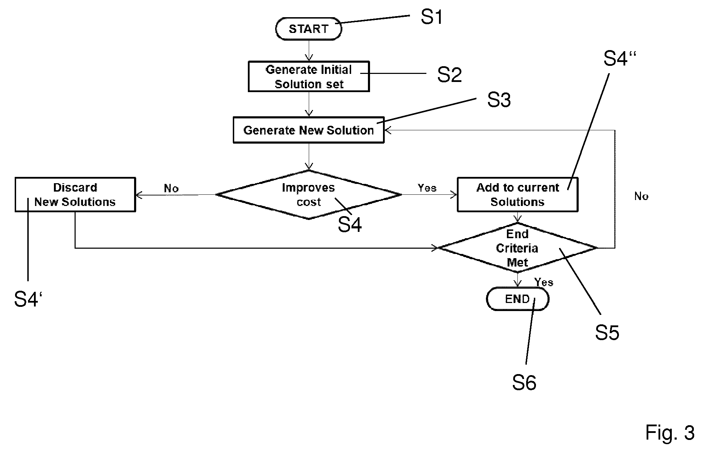

Fig. 3 shows a method according to a second embodiment of the present invention.

In Fig. 3 a flow diagram to generate a set of optimal routes respectively optimal routes is shown. In a first step S1 the method is started. In a second step S2 an initial route set for the routes is generated. In a third step S3 a new route is generated based on the initial route set. In a fourth step S4 the cost when the vehicle travelling along the routes is evaluated and if the costs of the new route has improved, then in a further step S4" the generated new route is added to the current route and if not, the new route is discarded in a further step S4'. In a fifth step S5 end criteria are checked and if they are not met then again the steps S3-S5 are performed and if the end criteria are met then the generated new route is the optimal route and the procedure ends in a sixth step S6. End criteria may include for example a maximum number of iterations to generate a new route, i.e. the number of iterations of steps S3-S5. Further end criteria may be for example the difference between the maximum and minimum cost or the average cost and minimum cost or the elapsed time. The overall termination condition including meeting one or more end criteria may be set in advance.

For example to minimize the cost together with route determination this problem may be expressed as follows:

$$\min_{x_{ij}^k} \quad \sum_k \sum_{ij} \left\{ c_{ij}^0 x_{ij}^k + \frac{1}{2} c_i \left( \sum_{j',k'} x_{ij'}^{k'} | C_i \right) x_{ij}^k \right\} \quad (1a)$$

$$\text{s.t.} \qquad c_{ij}^1 x_{ij}^k \leq E_k, \quad (1b)$$

$$\sum_j x_{ij}^k = 1, \forall k, i = \text{start}(R_k), \quad (1c)$$

$$\sum_i x_{ij}^k = 1, \forall k, j = \text{end}(R_k), \quad (1d)$$

$$\sum_j x_{ij}^k = \sum_j x_{ji}^k, \forall k, \quad (1e)$$

$$\sum_{ij} x_{ij}^k \leq L_k + 1, \quad (1f)$$

$$\sum_{j,k} x_{ij}^k \leq C_i, \forall i \in \text{CS}, \quad (1g)$$

$$x_{ij}^k \in \{0,1\}, \quad (1h)$$

The variables are respresented as follows:

$c_{ij}^{p}, p = \{0,1\}$ is the cost incurred for a vehicle to travel between two route points in the road network here named as node $i$ and node $j$. The $c_{ij}^{0}$ cost is a combination of the energy, time and distance between i-th and j-th nodes, which is to be minimized while the cost $c_{ij}^{1}$ is used to represent the energy constraint. $c_{ij}^{0}$ generally includes also the energy cost $c_{ij}^{1}$. In case $c_{ij}^{0} = c_{ij}^{1}$ , the provided route is minimized in terms of energy. Along with this, an additional cost $c_i(y|C_i)$ is associated with each charging station CS which is related to the use of the charging station by $y$ vehicles in the same time window. $C_i$ is the capacity (in terms of number of vehicle which can simultaneously charge at the station) of the $i^{th}$ charging station

Eq.1a is the non-linear minimization function in the variable $x_{ij}^k$, which represents if the $k$-th route is using the connection between $i$-th and $j$-th node. Eq. 1b is the constraint in the energy for the trip between any two destinations, whereas, eq.(1c) and eq.(1d) are used to represent start- and end-points of the $k$-th route/vehicle. Eq.(1e) is used to have a full path, while Eq.(1f) represent the limit in the number of visited charging stations, where the route $k$ "visits" at most $L_k$ charging stations. Eq.(1g) considers explicitly the limit of number of vehicles that can be charged at the $i^{th}$ charging station.

The important aspect of Eq.1 and modifications is that it provides a direct way to evaluate the "goodness" of a route with respect to constraints

When considering the traveling time between charging stations CS, booking of a specific time slot for charging at the charging station CS may be included. Only one vehicle can use a specific time slot per specific charging station CS. The problem is defined in the Eq.2, where $x^k_{ijl}$ is now 1 and the connection between the nodes i and j is used on route k at the $l^{th}$ time slot. $t_{ij}$ is the travel time on link ij and $t_i^{k+}$, $t_i^{k-}$ and $t_l$ are the time of entering/leaving the $i^{th}$ charging station CS and the time of start of the $l^{th}$ time slot.

$$\min_{x^k_{ijl}} \quad \sum_k \sum_{ijl} \left\{ c^0_{ij} x^k_{ijl} + \frac{1}{2} c_j \left( t^{k+}_j - t^{k-}_j \right) x^k_{ijl} \right\} \qquad (2a)$$

$$\text{s.t.} \qquad c^1_{ij} x^k_{ijl} \le E_k, \qquad (2b)$$

$$\sum_{j,l} x^k_{ijl} = 1, \forall k, i = \text{start}\,(R_k), \qquad (2c)$$

$$\sum_{i,l} x^k_{ijl} = 1, \forall k, j = \text{end}\,(R_k), \qquad (2d)$$

$$\sum_{ij} x^k_{ijl} \le L_k + 1, \qquad (2e)$$

$$\sum_l x^k_{ijl} \le 1, \qquad (2f)$$

$$(t^{k-}_j - t^{k+}_i) x^k_{ijl} = t_{ij}, \qquad (2g)$$

$$(t^{k-}_j - t_l) x^k_{ijl} \le 0, \qquad (2h)$$

$$(t^{k+}_j - t_{(l+1)}) x^k_{ijl} = 0, \qquad (2i)$$

$$\sum_{j,l} x^k_{ijl} = \sum_{j,l} x^k_{jil}, \forall k, \qquad (2j)$$

$$\sum_{j,k} x^k_{ijl} \le C_i, \forall i \in \text{CS}, \qquad (2k)$$

$$x^k_{ijl} \in \{0,1\}, \qquad (2l)$$

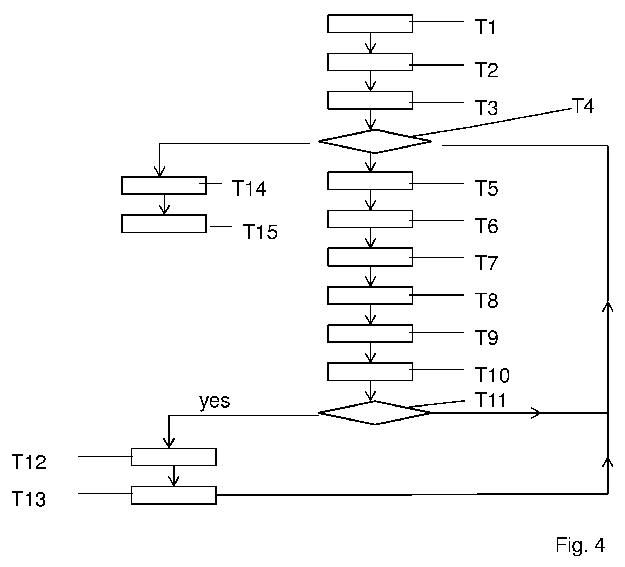

Fig. 4 shows a method according to a third embodiment of the present invention.

In Fig. 4 in a first step T1 the network of the charging stations and of the routes as well as the list of the origins and destinations is input. In a second step T2 a restricted network is generated. In a third step T3 an initial route set comprising routes for the vehicles from their origins to the destinations is generated. In a fourth step T4 it is checked if all routes have been checked against the new route which is generated in the further steps. In a step T5 a generation method for generating a new route is selected. In a sixth step T6 a certain number P of predecessors from the route set is selected. In a seventh step T7 a new route is generated from the P predecessors by using the selected generation method of step T5. In an eighth step T8 the new route is modified. In a ninth step T9 the feasibility of the new route is improved. In a tenth step T10 the cost of the new route is improved. In an eleventh step T11 it is checked whether the cost of the new route is smaller than the cost of one of the prior routes and if yes in a twelfth step T12 the old route is replaced by the new route and in a thirteenth step T13 the probability to use the selected generation method is increased. Then steps T4-T11 are performed again and if no steps T4-T11 are performed again. If all prior routes have been checked against the new route in a fourteenth step T14 termination conditions are clarified and if no steps T4-T11 respectively T4-T13 are performed for a further route.

To represent a route three representations are possible: For the route a binary representation with a variable $x_{k, j}$ may be used and set to one if the j-th charging station is used by the k-th route. In this case the dimension of the route space is $2^{LM}$, where L is the number of charging stations and M is the number of routes. The overall representation structure used in this case is then at two dimensional binary array. As a second option a binary representation may be used, where the variable $x_{k, i, j}$ is set to one if the connection between the i-th and the j-th charging station is used by the k-th route. In this case the space of the route is $2^{ML}$ (L-1)/2. The representation structure used in this case is also a two dimensional binary array. As a third option a direct enumeration of the visited charging stations may be used. In this case the route space is factorial in the number of charging stations $(L!)^M$. The representation structure is then a two dimensional integer array.

If a booking of a specific time slot is considered then the route representation changes including a corresponding time slot index. In case of the first two cases A and B the route representation is a three dimensional binary array and for the last case C it is an array of a list of pairs of indexes of charging stations CS and indexes of its time slot.
For example when using the first binary representation A an ordering inside the selected charging station shall be defined. The ordering minimizes the cost of the route for example. Minimizing the costs with regard to the ordering might be solved by using a travel salesman problem TSP with a constraint which limits the number of charging stations to be visited. If the number of maximum charging stations per generated route is limited the TSP can be resolved by brute force approach. Whenever a new route shall be evaluated the travel salesman problem is then resolved and their value and result are stored for computational efficiency.
The cost function f() is defined by Eq.1 or Eq.2 by the first line cost, plus the infeasibility cost, that is added to the first line cost multiplied by a cost that is higher than the maximum route cost. In this way it is guaranteed that a feasible route is always preferred to any infeasible route.
The initial route set may be generated by using one or more of the following criteria: a) Randomly select a charging station for each trip, where the number of charging stations is lower than the maximum number of charging stations. b) All direct path routes are used. c) Among minimum distance routes those are randomly selected respecting the battery capacity of the vehicle along any route segment. The option b) is always included in the set of routes. The shortest path initial route generation for each trip a new graph is generated starting from the graph of the charging station. Origin and destination may be added with their connection to all other charging stations. All those connections respecting battery constraints may be kept with cost 1 and the other ones are discarded. All shortest paths may be then returned for the generation of the initial set of routes.

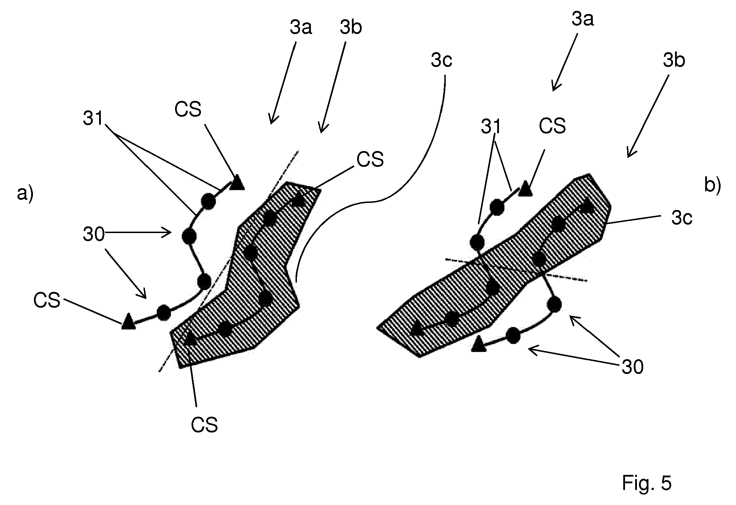

Fig. 5a and 5b show part of a method according to a fourth embodiment of the present invention.
In Fig. 5a a horizontal route segmentation and in Fig. 5b a vertical route segmentation is shown. Route segments 31 with start- and end-points 30 are shown, resulting in a route between two charging stations CS. When a new route is generated then a set of P routes, in Fig. 5a and 5b two routes 3a and 3b are selected from the prior generated route set. The selection of the P routes 3a, 3b is based on a probability distribution which may be a uniform distribution or a probability distribution proportional to the inverse of costs associated with the route. In the latter case the higher the costs the lower is the probability to be selected according to the overall principle of minimizing costs when an electric vehicle travels along the generated route.

After the selection of the P routes respectively predecessors 3a and 3b the new route 3c is generated using for example one of the following rules: For each trip one of the predecessors is selected randomly and from that predecessor the route is taken. Another option is that for each trip as shown in Fig. 5b a set of route segments is split into P' partitions. For each partition a predecessor is assigned and a new route is created containing the route built of the start- and end-points of the route segments visited by an i-th predecessor in the i-th partition.

As a further option a combinatorial problem for generating a new route can be solved and a combination of routes from the predecessor route which gives them the best cost is selected. An even further option is, that alternatively only a combination of routes that have fewer constraint violations instead of giving the best costs are selected. For example this combinatorial problem may be defined as follows:

$$\min_{y_k^p} \quad \sum_k \sum_{ij} \left\{ c_{ij}^0 t_{ij}^k + \frac{1}{2} c_i \left( \sum_{j',k'} x_{ij'}^{k'} \mid C_i \right) t_{ij}^k \right\} \qquad (3a)$$

$$\text{s.t.} \qquad \sum_p y_k^p = 1, \qquad (3b)$$

$$y_k^p \in \{0,1\}, \qquad (3c)$$

$$t_{ij}^k = \sum_p y_k^p x_{ij}^{kp}, \qquad (3d)$$

wherein $c_{ij}^0$ is a cost representing a combination of the energy, time and distance between i-th and j-th node to be minimized, $t_{ij}^k$ is the travel time of the k-th route between the start-point i and end-point j of the k-th route segment.

$$c_i \left( \sum_{j',k'} x_{ij'}^{k'} \mid C_i \right)$$

is an additional cost associated with each charging station which is related to the use of the charging station by i vehicles. Equation 3b represents routes segments of the k-the route overall P partitions. Equation 3d is the travel time between start-point i and end-point j. In order to select a method for generating a new route a learning technique may be used along the iteration. The above mentioned third and fourth option may be provided by iterating among predecessor routes and trip within a predecessor route. Then the route is selected that either minimizes the overall cost or reduces the infeasibility. In order to avoid systematic errors/same routes the order of the iteration can be randomized.

The selection of the generation method is performed according to a probability distribution. Each time a new route is generated the "successfulness" of this generation method is evaluated. For example, if the route generated with the generation method has a reduced cost, then the selection probability for this generation method is increased so that when generating a new route the more successful generation method is more likely to be selected for generating a new route.

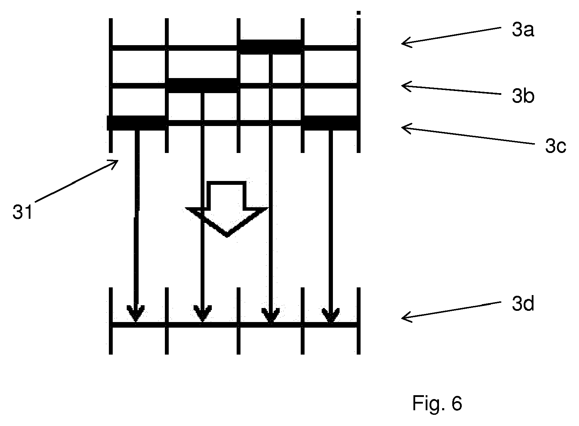

Fig. 6 shows part of a method according to a fifth embodiment of the present invention.

In Fig. 6 the above described route selection is shown. Different routes 3a, 3b, 3c with different route segments 31 are combined to a new route 3d.

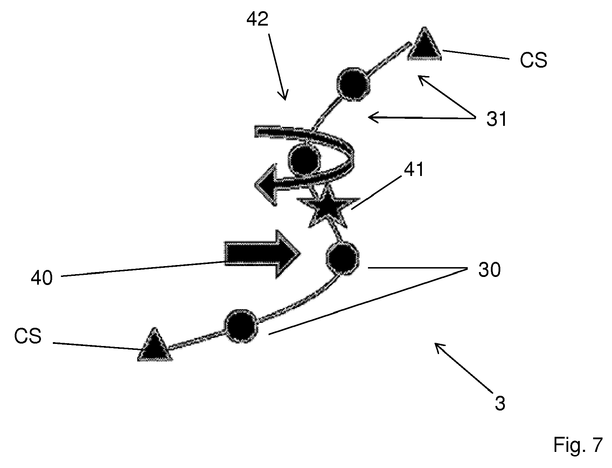

Fig. 7 shows part of a method according to a sixth embodiment of the present invention.

In Fig. 7 a route between two charging stations with route segments 31 and start-respectively end-points 30 of these route segments is shown. After the generation of a new route the route is first modified randomly. The random modification enables visiting new parts of the route space. In Fig. 7 adding 40, removing 41 and substituting 42 is schematically shown for the route 3. The route segment and the type of actions described above are selected randomly but the application of the corresponding action is preferably depending on feasibility: No new action is made if the route becomes infeasible. Unfeasible modifications of the route 3 can be accepted according to a probability which is reduced along the iterations.

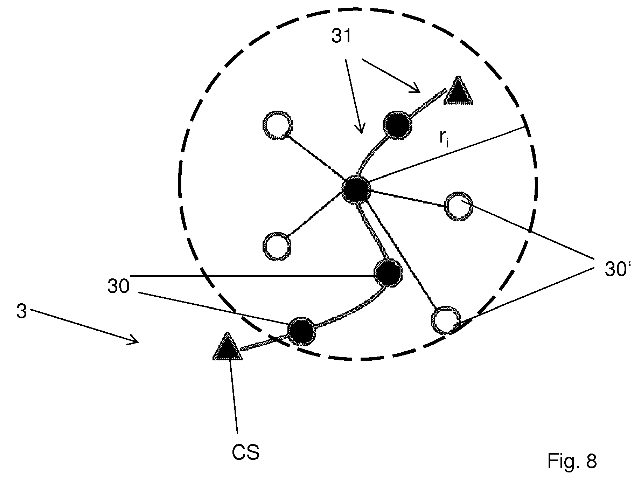

Fig. 8 shows part of a method according to a seventh embodiment of the present invention.

In Fig. 8 a mutation is shown for route 3 according to Fig. 7. The mutation may be restricted to a network representing a vicinity among start- and end-points 30 of route segments. A new start-point or end-point 30' is selected among neighbours in the route. Such a network may be called restricted network. For example the origin of the circle in Fig. 8 with radius $r_i$ of start-point i may be representing a vicinity of this point. In this vicinity different other start-points respectively end-points 30' may be chosen to mutate the original route.

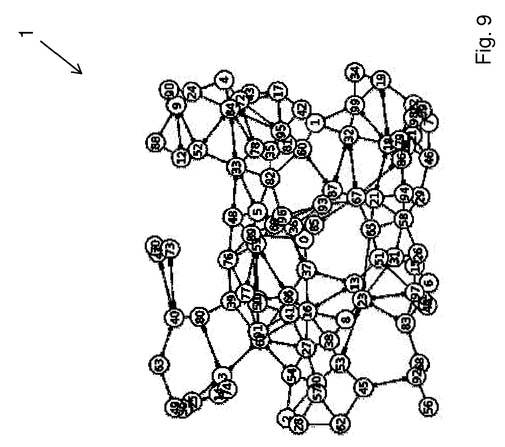

Fig. 9 shows schematically a route network with numbered interconnection points between route segments.

For Fig. 9 a method according to an embodiment of the present invention was implemented and tested against a synthetic network of charging stations. This network is shown in Fig. 9 where the nodes have been randomly set in a two dimensional space. For the test network the cost of the origin and destination is proportional to the distance. More generic cost has also been implemented. Among all nodes ten nodes were selected as charging stations in order to cover uniformly the network.

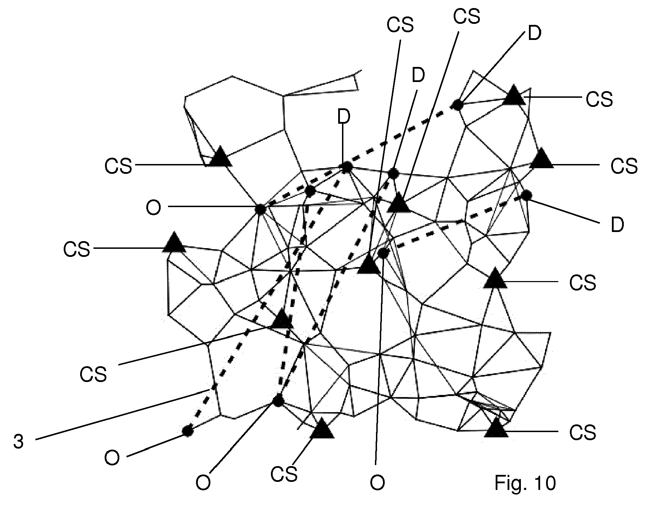

This is shown in Fig. 10 with rectangular points. Some of the nodes were selected to represent the trips, i.e. travel from origin to destination. Therefore Fig. 10 shows the location of the charging stations CS and the trips in the synthetic network are shown in dotted lines. In Fig. 10 the triangles in the network represent charging stations and the dotted lines correspond to routes of electric vehicles along the route and charging station network.

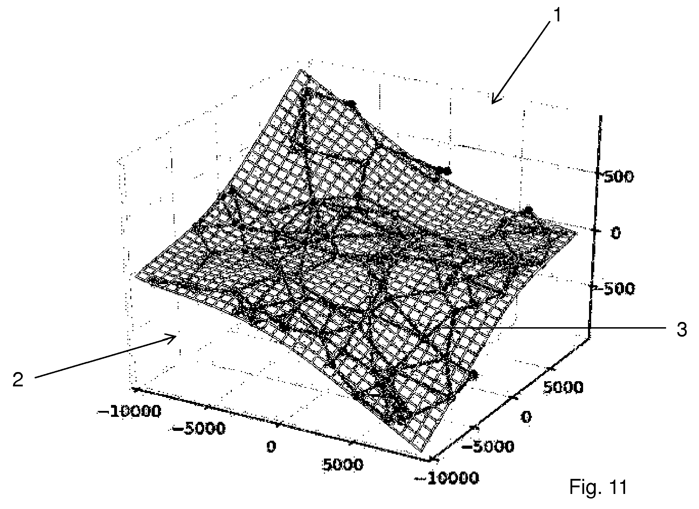

Fig. 11 shows a three dimensional representation of a route network according to Fig. 1 with the Z coordinate being a cost parameter.

In Fig. 11 a route network 2 with routes (bold) is added with a Z coordinate. The Z coordinate represents higher or lower associated cost when travelling along this path. If for example a vehicle starts at the left side and travels along the Y axis on one of the paths then the costs increases, whereas if the vehicle starting on the left travels along the X axis the costs decreases since the Z coordinate gets negative.

Fig. 11 shows therefore another test network with a Z axis being used for energy computation in addition to the other parameters as distance, speed, resistance and air drag coefficients or the like.

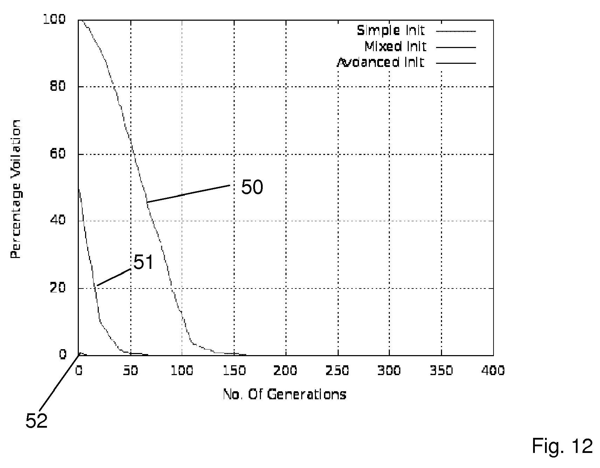

Fig. 12 shows a percentage of violation over iterations for three different generation methods.

In Fig. 12 the percentage of violation of the number of the generated set of routes along iterations for the steps d)-i) for different initial route generation methods is shown. Graph 52 representing a so-called advanced initial route has almost no violations from the beginning whereas for a simple initial route the number of violations is high. Different initial route generation methods are mixed respectively combined and weighed with 0%, 50% and 100%.

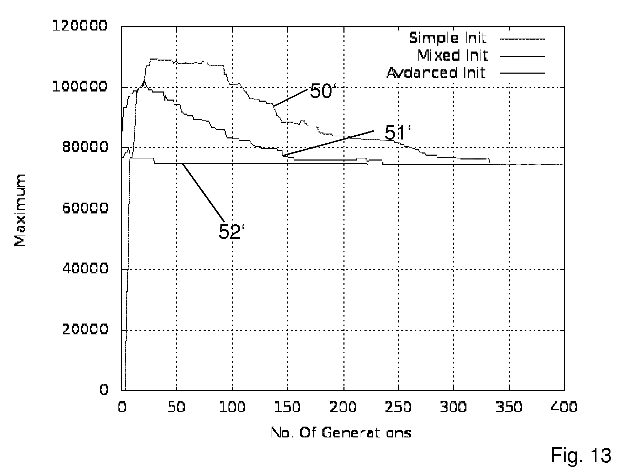

Fig. 13 shows the maximum value for different initial populations according to Fig. 12.

In Fig. 13 a maximum value for the cost of the set of routes for different initial route generation methods are shown. Fig. 13 represents an evolution of iterations, in particular of steps d)-i), of the route generation method of the maximum value for the cost of the set of routes, which are feasible. Unfeasible set of routes are not considered. This results in an intial low cost and turns to possibly higher cost, when set of routes turn to feasible. Fig. 13 shows therefore the maximum value for the three cases mentioned in Fig. 12 with graphs 50, 51 and 52: The graphs 50', 51' and 52' show a share between the generation method of graph 52 and the generation method of graph 50 with 0% (52'), 50% (51') and 100% (50') for the generation of initial sets of routes, wherein all direct path routes are always included.

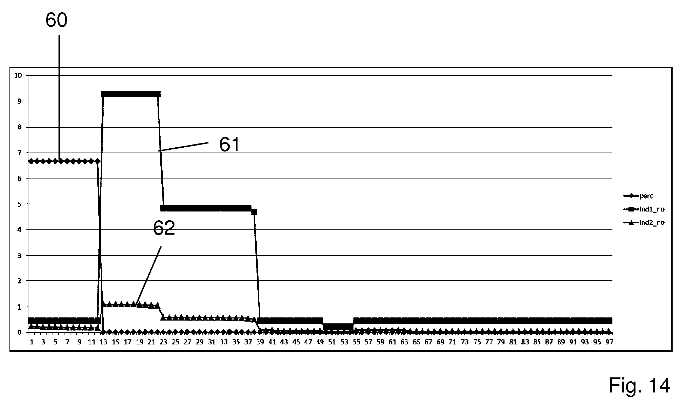

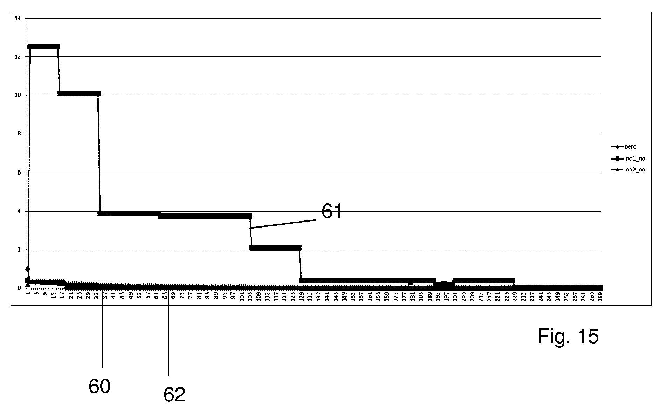

Fig. 14   shows two indicators/parameters for a first population size and Fig. 15 shows the two indicators/parameters for a second population size.

In Fig. 14 and Fig. 15 two different indicators 61, 62 are shown. The first indicator 61 represents the difference between the maximum cost and minimum cost whereas the second indicator represented by graph 62 represents the difference between the average cost and the minimal cost. Graph 60 represents the percentage of the route that violates constraints. Fig. 14 shows graphs for a set of routes with the number of ten and Fig. 15 shows the same for a set of routes comprising one hundred routes.

Fig. 14 and Fig. 15 show that by increasing a number of routes respectively the population avoids local minima but requires more time to let all routes to be equal to the minimal cost.

In summary the present invention enables in particular to define a vehicle routing problem considering a charging station with limited resources, i.e. in particular the number of charging vehicles at the same time/concurring charging, vehicles with different source and destination points and different battery capacity. Further the present invention enables to find an optimal route to the vehicle routing problem with high flexibility. Further methods for representing the route of the vehicle routing problem, methods for generating an initial set of routes, methods for generation of a new route, methods for modification of a new route, and definition of a restricted network are provided. The present invention enables charging station time window booking, dynamic and/or varying requests, i.e. real time request processing and also to vehicles in general.

The present invention provides inter alia the following advantages: The present invention enables to provide an advanced and integrated vehicle routing service for private and public fleet and for private or public charging station operators or owners. Further the present invention allows a reduction of battery capacity and therefore initial investment especially for a fleet of vehicles. The present invention allows transport optimization in urban areas for a better delivery of goods. Even further the present invention reduces the waiting time at charging stations by reducing conflicts and allow an implementation of an advanced booking system.

Even further the present invention optimizes a driving range for a vehicle, in particular an electric vehicle with optimal charging stops with minimized waiting time along a route from the origin to the destination.

**Claims**

1. A method for determining routes of vehicles (EV), preferably electric vehicles, **characterized by** the steps of

    a) Providing (T1) characteristics of charging stations (CS), a number of vehicles (EV) and their respective start- and end-points (O, D) of their trips and preferably of their intermediate points,
    b) Generating (T2) a road network (2) comprising road segments for the vehicles (EV) and a charging station network for the charging stations (CS) along road points in the road network (2),
    c) Generating (T3) an initial route for each vehicle (EV) from the respective start-point (O) to the end-point (D) via the road network (2) and via the charging station network,
    d) Selecting (T5) a generation method for generating routes (O, D) for said vehicles (EV) out of at least two generation methods,
    e) Generating (T7) a new route for each vehicle (EV) based on one or more prior generated routes for each vehicle (EV) according to the selected generation method,
    f) Evaluating (T11) the generated new route for each vehicle (EV) based on one or more parameters,
    g) Comparing (T11) the evaluated route with prior generated routes for each vehicle (EV),
    h) Replacing (T12) one or more of the prior generated routes for each vehicle (EV) with the evaluated route for each vehicle (EV) according to a result of the comparison,
    i) Checking (T14) if the new route for each vehicle (EV) satisfies one or more final criteria and if yes, defining the new route for each vehicle (EV) as being the optimal route for the corresponding vehicle, otherwise perform at least steps d)-i) again.

2. The method according to claim 1, **characterized in that** a probability for selecting a generation method according to step d) is increased (T13) according to the result of the comparison.

3. The method according to one of the claims 1-2, **characterized in that** after generating the new route, the new route is modified (T8), preferably randomly.

4. The method according to claim 3, **characterized in that** the new route is modified (T8) by adding (40), removing (41) and/or substituting (42) route network segments (31) and/or charging stations (EV).

5. The method according to one of the claims 3-4, **characterized in that** the new route is modified in a given vicinity ($r_i$) of a start- or end-point (30) of a route segment (31).

6. The method according to one of the claims 1-5, **characterized in that** the modified new routes are improved (T9, T10) according one of the one or more parameters.

7. The method according to one of the claims 1-6, **characterized in that** the prior generated routes are selected according to a probability distribution, preferably a uniform distribution or a distribution based on evaluated prior routes.

8. The method according to one of the claims 1-7, **characterized in that** a new route is generated by randomly selecting one of the prior generated routes.

9. The method according to one of the claims 1-7, **characterized in that** a new route (3c) is generated by combining one or more route segments of different generated routes (3a, 3b).

10. The method according to claim 9, **characterized in that** the one or more route segments of the different generated routes (3a, 3b) are based on an evaluation according to the one or more parameters, preferably wherein one or more route constraints are defined and based on a higher number of fulfilled constraints the one or more route segments are selected for combining.

11. The method according to claim 10, **characterized in that** the result of an evaluation according to the one or more parameters for selecting the one or more route segments for combining is estimated by iterating prior generated routes and trip within one route.

12. The method according to one of the claims 1-11, **characterized in that** the road network (2) is provided in form of a restricted network, preferably based on maximum distances among charging stations (CS) and/or a maximum number of charging stations (CS), ordered by their distance.

13. The method according to one of the claims 1-12, **characterized in that** the vehicles (EV) are provided in form of electric and/or combustion vehicles, and wherein charging stations (CS) are provided in form of a electric charging station and/or a gas station

14. The method according to one of the claims 1-13, **characterized in that** for dynamic route request I) a time interval for the optimal routes to be valid is predetermined and after that time interval new optimal routes are determined by performing at least steps e)-i) or II) one or more prior generated routes are included preferably with a reduced evaluation result.

15. System (10) for determining routes of vehicles (EV), preferably for performing with a method according to one of the claims 1-14, **characterized by** Input means (11) for inputting characteristics of charging stations (CS), a number of vehicles (EV) and their respective start- and end-points (O, D) of their trips and preferably of their intermediate points,
Network generation means (12) for generating a road network (2) comprising road segments for the vehicles (EV) and a charging station network for the charging stations (CS) along points in the road network (2),
Route generation means (13) for generating an initial route for each vehicle (EV) from the respective start-point (O) to the end-point (D) via the road network (2) and via the charging station network, and for generating a new route for each vehicle (EV) based on one or more prior generated routes for each vehicle (EV) according to the selected generation method,
Selecting means (14) for selecting a generation method for generating routes (O, D) for said vehicles (EV) out of at least two generation methods,
Evaluating means (15) for evaluating the generated new route for each vehicle (EV) based on one or more parameters,
Comparing means (16) for comparing the evaluated route with prior generated routes for each vehicle (EV),
Modifying means (17) for replacing one or more of the prior generated routes for each vehicle (EV) with the corresponding evaluated route for each vehicle (EV) according to a result of the comparison, and
Checking means (18) for checking if the new route for each vehicle (EV) satisfy one or more final criteria and if yes, defining the new route as being optimal route for the corresponding vehicle (EV), otherwise instruct at least the selecting means (14), the evaluation means (15), the comparing means (16), the modifying means (17) and the checking means (18) for reprocessing.

**Patentansprüche**

1. Ein Verfahren zur Bestimmung von Fahrstrecken von Fahrzeugen (EV), vorzugsweise elektrischen Fahrzeugen, **gekennzeichnet durch** die Schritte

a) Bereitstellen (T1) von Kenndaten von Ladestationen (CS), einer Anzahl von Fahrzeugen (EV) und ihrer entsprechenden Start- und Endpunkte (O, D) von ihren Touren und vorzugsweise von ihren Zwischenpunkten,
b) Erzeugen (T2) eines Straßennetzwerks (2), umfassend Straßensegmente für die Fahrzeuge (EV) und einem Ladestationsnetzwerk für die Ladestationen (CS) entlang der Straßenpunkte in dem Straßennetz (2),
c) Erzeugen (T3) einer Anfangsfahrstrecke für jedes Fahrzeug (EV) von dem entsprechenden Startpunkt (O) zu dem Endpunkt (D) über das Straßennetzwerk (2) und über das Ladestationsnetzwerk,
d) Auswählen (T5) eines Erzeugungsverfahrens für die Erzeugung von Fahrstrecken (O, D) für besagte Fahrzeuge (EV) aus zumindest zwei Erzeugungsverfahren,
e) Erzeugen (T7) einer neuen Fahrstrecke für jedes Fahrzeug (EV), basierend auf einer oder mehrerer vorher erzeugter Fahrstrecken für jedes Fahrzeug (EV) entsprechend dem ausgewählten Erzeugungsverfahren,
f) Auswerten (T11) der erzeugten neuen Fahrstrecke für jedes Fahrzeug (EV), basierend auf einem oder mehreren Parametern,
g) Vergleichen (T11) der ausgewerteten Fahrstrecke mit vorher erzeugten Fahrstrecken für jedes Fahrzeug (EV),
h) Ersetzen (T12) von einer oder mehreren der vorher erzeugten Fahrstrecken für jedes Fahrzeug (EV) mit der ausgewerteten Fahrstrecke für jedes Fahrzeug (EV) entsprechend dem Ergebnis des Vergleichs,
i) Prüfen (T14), ob die neue Fahrstrecke für jedes Fahrzeug (EV) einem oder mehreren Endkriterien entspricht und wenn ja Festlegen der neuen Fahrstrecke für jedes Fahrzeug (EV) als die optimale Fahrstrecke für das entsprechende Fahrzeug, andernfalls zumindest die Schritte e) bis i) erneut durchführen.

2. Das Verfahren gemäß Anspruch 1, **dadurch gekennzeichnet, dass** eine Wahrscheinlichkeit für die Auswahl eines Erzeugungsverfahrens gemäß Schritt d) erhöht wird, entsprechend dem Ergebnis des Vergleichs.

3. Das Verfahren gemäß einem der Ansprüche 1 bis 2, **dadurch gekennzeichnet, dass** nach Erzeugung der neuen Fahrstrecke die neue Fahrstrecke verändert wird (T8), vorzugsweise zufällig.

4. Das Verfahren gemäß Anspruch 3, **dadurch gekennzeichnet, dass** die neue Fahrstrecke geändert wird (T8) durch Hinzufügen (40), Entfernen (41) und/oder Ersetzen (42) von Fahrstreckennetzwerksegmenten (31) und/oder Ladestationen (CS).

5. Das Verfahren gemäß einem der Ansprüche 3 bis 4, **dadurch gekennzeichnet, dass** die neue Fahrstrecke verändert wird in einer vorgegebenen Umgebung ($r_i$), eines Start- oder Endpunktes (30) eines Fahrstreckensegments (31).

6. Das Verfahren gemäß einem der Ansprüche 1 bis 5, **dadurch gekennzeichnet, dass** die geänderten neuen Fahrstrecken verbessert werden (T9, T10) entsprechend einem der einen oder mehreren Parameter.

7. Das Verfahren gemäß einem der Ansprüche 1 bis 6, **dadurch gekennzeichnet, dass** die vorher erzeugten Fahrstrecken ausgewählt werden entsprechend einer Wahrscheinlichkeitsverteilung, vorzugsweise einer Gleichverteilung oder einer Verteilung basierend auf ausgewerteten vorher erzeugten Fahrstrecken.

8. Das Verfahren gemäß einem der Ansprüche 1 bis 7, **dadurch gekennzeichnet, dass** eine neue Fahrstrecke erzeugt wird durch zufälliges Auswählen einer der vorher erzeugten Fahrstrecken.

9. Das Verfahren gemäß einem der Ansprüche 1 bis 7, **dadurch gekennzeichnet, dass** eine neue Fahrstrecke (3c) erzeugt wird durch Kombinieren einer oder mehreren Fahrstreckensegmente von verschiedenen erzeugten Fahrstrecken (3a, 3b).

10. Das Verfahren gemäß Anspruch 9, **dadurch gekennzeichnet, dass** die einen oder mehreren Fahrstreckensegmente von verschiedenen erzeugten Fahrstrecken (3a, 3b) auf einer Auswertung entsprechend den einen oder mehreren Parametern basieren, vorzugsweise wobei eine oder mehrere Fahrstreckenrandbedingungen definiert werden und basierend auf einer höheren Anzahl von erfüllten Randbedingungen, die eine oder mehreren Fahrstreckensegmente ausgewählt werden für eine Kombination.

11. Das Verfahren gemäß Anspruch 10, **dadurch gekennzeichnet, dass** ein Ergebnis einer Auswertung entsprechend den einen oder mehreren Parametern zur Auswahl der einen oder mehreren Fahrstreckensegmente zur Kombination geschätzt wird durch Iterieren von vorher erzeugten Fahrstrecken und Touren innerhalb einer Fahrstrecke.

12. Das Verfahren gemäß einem der Ansprüche 1 bis 11, **dadurch gekennzeichnet, dass** das Straßennetzwerk (2) bereitgestellt wird in Form eines beschränkten Netzwerks, vorzugsweise basierend auf maximalen Entfernungen zwischen Ladestation (CS) und/oder einer maximalen Anzahl von Ladestationen (CS), geordnet nach ihrer Entfernung.

13. Das Verfahren gemäß einem der Ansprüche 1 bis 12, **dadurch gekennzeichnet, dass** die Fahrzeuge (EV) bereitgestellt werden in Form von elektrischen und/oder Verbrennungsfahrzeugen und wobei die Ladestation (CS) in Form von elektrischen Ladestationen und/oder einer Tankstelle bereitgestellt werden.

14. Das Verfahren gemäß einem der Ansprüche 1 bis 13, **dadurch gekennzeichnet, dass** für eine dynamische Fahrstreckenanfrage I) ein Zeitintervall für die optimalen Fahrstrecken, die gültig sind, vorab definiert wird und nach diesem Zeitintervall neue optimale Fahrstrecken ermittelt werden mittels Durchführung zumindest der Schritte e) bis i) oder II) eine oder mehrere der vorab erzeugten Fahrstrecken einbezogen werden, vorzugsweise mit einem reduzierten Auswertungsergebnis.

15. System (10) zur Ermittlung von Fahrstrecken von Fahrzeugen (EV), vorzugsweise zur Durchführung eines Verfahrens gemäß einem der Ansprüche 1 bis 14, **gekennzeichnet durch**
Eingabemittel (11) für Eingabe von Kenndaten von Ladestationen (CS), einer Anzahl von Fahrzeugen (EV) und ihrer entsprechenden Start- und Endpunkte (O, D) ihrer Touren und vorzugsweise ihrer Zwischenpunkte, Netzwerkerzeugungsmittel (12) zur Erzeugung eines Straßennetzwerks (2) umfassend Straßensegmente für die Fahrzeuge (EV) und ein Ladestationsnetzwerk für die Ladestationen (CS) entlang von Punkten in dem Straßennetzwerk (2), Fahrstreckenerzeugungsmittel (13) zur Erzeugung einer Anfangsfahrstrecke für jedes Fahrzeug (EV) von dem entsprechenden Startpunkt (O) zu dem entsprechenden Endpunkt (D) über das Straßennetzwerk (2) und über das Ladestationsnetzwerk und zur Erzeugung einer neuen Fahrstrecke für jedes Fahrzeug (EV), basierend auf einer oder mehrerer vorher erzeugter Fahrstrecken für jedes Fahrzeug (EV) entsprechend einem ausgewählten Erzeugungsverfahren,

Auswahlmittel (14) zur Auswahl eines Erzeugungsverfahrens zur Erzeugung von Fahrstrecken (O, D) für besagte Fahrzeuge (EV) aus zumindest zwei Erzeugungsverfahren,

Auswertemittel (15) zur Auswertung der erzeugten neuen Fahrstrecke für jedes Fahrzeug (EV), basierend auf einem oder mehreren Parametern,

Vergleichsmittel (16) zum Vergleichen der ausgewerteten Fahrstrecke mit vorher erzeugten Fahrstrecken für jedes Fahrzeug (EV),

Veränderungsmittel (17) zum Ersetzen einer oder mehreren der vorher erzeugten Fahrstrecken für jedes Fahrzeug (EV) mit der entsprechenden ausgewerteten Fahrstrecke für jedes Fahrzeug (EV) entsprechend einem Ergebnis des Vergleichs und Überprüfungsmittel (18) zur Überprüfung, ob die neue Fahrstrecke für jedes Fahrzeug (EV) einem oder mehreren Endkriterien genügt und falls ja, Festlegen der neuen Fahrstrecke als optimale Fahrstrecke für das entsprechende Fahrzeug (EV), andernfalls Anweisen zumindest des Auswahlmittels (14), des Auswertemittels (15), des Vergleichsmittels (16), des Veränderungsmittels (17) und des Überprüfungsmittels (18) zur Wiederabarbeitung.

## Revendications

1. Procédé de détermination d'itinéraires de véhicules (EV), de préférence de véhicules électriques, **caractérisé par** les étapes ci-dessous consistant à :

   a) fournir (T1) des caractéristiques de stations de charge (CS), un nombre de véhicules (EV) et leurs points de départ et points d'arrivée respectifs (O, D) de leurs parcours et de préférence de leurs points intermédiaires ;
   b) générer (T2) un réseau routier (2) comprenant des sections de route pour les véhicules (EV) et un réseau de stations de charge pour les stations de charge (CS) le long de points de route dans le réseau routier (2) ;
   c) générer (T3) un itinéraire initial pour chaque véhicule (EV), du point de départ respectif (O) au point d'arrivée (D), par l'intermédiaire du réseau routier (2) et par l'intermédiaire du réseau de stations de charge ;
   d) sélectionner (T5) un procédé de génération pour générer des itinéraires (O, D) pour lesdits véhicules (EV) parmi au moins deux procédés de génération ;
   e) générer (T7) un nouvel itinéraire pour chaque véhicule (EV) sur la base d'un ou plusieurs itinéraires générés antérieurs pour chaque véhicule (EV) selon le procédé de génération sélectionné ;
   f) évaluer (T11) le nouvel itinéraire généré pour chaque véhicule (EV) sur la base d'un ou plusieurs paramètres ;
   g) comparer (T11) l'itinéraire évalué à des itinéraires générés antérieurs pour chaque véhicule (EV) ;
   h) remplacer (T12) un ou plusieurs des itinéraires générés antérieurs pour chaque véhicule (EV) par l'itinéraire évalué pour chaque véhicule (EV) selon un résultat de la comparaison ;
   i) vérifier (T14) si le nouvel itinéraire pour chaque véhicule (EV) satisfait un ou plusieurs critères finaux, et le cas échéant, définir le nouvel itinéraire pour chaque véhicule (EV) comme étant l'itinéraire optimal pour le véhicule correspondant, sinon, mettre en oeuvre à nouveau au moins les étapes d) à i).

2. Procédé selon la revendication 1, **caractérisé en ce qu'**une probabilité de sélection d'un procédé de génération selon l'étape d) est accrue (T13) selon le résultat de la comparaison.

3. Procédé selon l'une quelconque des revendications 1 à 2, **caractérisé en ce que**, suite à la génération du nouvel itinéraire, le nouvel itinéraire est modifié (T8), de préférence de façon aléatoire.

4. Procédé selon la revendication 3, **caractérisé en ce que** le nouvel itinéraire est modifié (T8) en ajoutant (40), en supprimant (41) et/ou en substituant (42) des sections de réseau d'itinéraires (31) et/ou des stations de charge (EV).

5. Procédé selon l'une quelconque des revendications 3 à 4, **caractérisé en ce que** le nouvel itinéraire est modifié dans un voisinage donné ($r_i$) d'un point de départ ou d'un point d'arrivée (30) d'une section d'itinéraire (31).

**6.** Procédé selon l'une quelconque des revendications 1 à 5, **caractérisé en ce que** les nouveaux itinéraires modifiés sont améliorés (T9, T10) selon l'un quelconque dudit un ou desdits plusieurs paramètres.

**7.** Procédé selon l'une quelconque des revendications 1 à 6, **caractérisé en ce que** les itinéraires générés antérieurs sont sélectionnés selon une distribution de probabilités, de préférence une distribution uniforme ou une distribution basée sur des itinéraires antérieurs évalués.

**8.** Procédé selon l'une quelconque des revendications 1 à 7, **caractérisé en ce qu'**un nouvel itinéraire est généré en sélectionnant de façon aléatoire l'un des itinéraires générés antérieurs.

**9.** Procédé selon l'une quelconque des revendications 1 à 7, **caractérisé en ce qu'**un nouvel itinéraire (3c) est généré en combinant une ou plusieurs sections d'itinéraire de différents itinéraires générés (3a, 3b).

**10.** Procédé selon la revendication 9, **caractérisé en ce que** ladite une ou lesdites plusieurs sections d'itinéraire des différents itinéraires générés (3a, 3b) sont basées sur une évaluation selon ledit un ou lesdits plusieurs paramètres, de préférence dans lequel une ou plusieurs contraintes d'itinéraire sont définies, et sur la base d'un nombre plus élevé de contraintes remplies, ladite une ou lesdites plusieurs sections d'itinéraire sont sélectionnées afin d'être combinées.

**11.** Procédé selon la revendication 10, **caractérisé en ce que** le résultat d'une évaluation selon ledit un ou lesdits plusieurs paramètres pour sélectionner ladite une ou lesdites plusieurs sections d'itinéraire à combiner est estimé par l'itération d'itinéraires générés antérieurs et de parcours au sein d'un itinéraire.

**12.** Procédé selon l'une quelconque des revendications 1 à 11, **caractérisé en ce que** le réseau routier (2) est fourni sous la forme d'un réseau restreint, de préférence sur la base de distances maximales entre des stations de charge (CS) et/ou d'un nombre maximum de stations de charge (CS), ordonnées selon leur distance.

**13.** Procédé selon l'une quelconque des revendications 1 à 12, **caractérisé en ce que** les véhicules (EV) sont fournis sous la forme de véhicules électriques et/ou de véhicules à combustion, et dans lequel les stations de charge (CS) sont fournies sous la forme d'une station de charge électrique et/ou d'une station à gaz.

**14.** Procédé selon l'une quelconque des revendications 1 à 13, **caractérisé en ce que**, pour une demande d'itinéraire dynamique, I) un intervalle de temps pour que les itinéraires optimaux soient valides est prédéterminé, et après cet intervalle de temps, de nouveaux itinéraires optimaux sont déterminés en mettant en oeuvre au moins les étapes e) à i), ou II) un ou plusieurs itinéraires générés antérieurs sont inclus de préférence avec un résultat d'évaluation réduit.

**15.** Système (10) destiné à déterminer des itinéraires de véhicules (EV), de préférence en vue de mettre en oeuvre un procédé selon l'une quelconque des revendications 1 à 14, **caractérisé par** :

un moyen de saisie (11) pour saisir des caractéristiques de stations de charge (CS), un nombre de véhicules (EV) et leurs points de départ et points d'arrivée respectifs (O, D) de leurs parcours, et de préférence de leurs points intermédiaires ;
un moyen de génération de réseau (12) pour générer un réseau routier (2) comprenant des sections de route pour les véhicules (EV) et un réseau de stations de charge pour les stations de charge (CS) le long de points dans le réseau routier (2) ;
un moyen de génération d'itinéraire (13) pour générer un itinéraire initial pour chaque véhicule (EV), du point de départ respectif (O) au point d'arrivée (D),
par l'intermédiaire du réseau routier (2) et par l'intermédiaire du réseau de stations de charge, et pour générer un nouvel itinéraire pour chaque véhicule (EV) sur la base d'un ou plusieurs itinéraires générés antérieurs pour chaque véhicule (EV) selon le procédé de génération sélectionné ;
un moyen de sélection (14) pour sélectionner un procédé de génération pour générer des itinéraires (O, D) pour lesdits véhicules (EV) parmi au moins deux procédés de génération ;
un moyen d'évaluation (15) pour évaluer le nouvel itinéraire généré pour chaque véhicule (EV) sur la base d'un ou plusieurs paramètres ;
un moyen de comparaison (16) pour comparer l'itinéraire évalué à des itinéraires générés antérieurs pour chaque véhicule (EV) ;
un moyen de modification (17) pour remplacer un ou plusieurs des itinéraires générés antérieurs pour chaque véhicule (EV) par l'itinéraire évalué correspondant pour chaque véhicule (EV) selon un résultat de la comparaison ; et

un moyen de vérification (18) pour vérifier si le nouvel itinéraire pour chaque véhicule (EV) satisfait un ou plusieurs critères finaux, et le cas échéant, définir le nouvel itinéraire comme étant l'itinéraire optimal pour le véhicule correspondant (EV), et sinon, pour commander un retraitement au moins au moyen de sélection (14), au moyen d'évaluation (15), au moyen de comparaison (16), au moyen de modification (17) et au moyen de vérification (18).

Fig. 1

Charging Stations
Network

Vehicle's
Origin and Destination

Vehicle's
Charging Stations
Along the route

Vehicle's Route

11, 12, 13, 14, 15, 16, 17, 18

10

Fig. 2

Fig. 3

Fig. 4

Fig. 5

EP 2 825 849 B1

Fig. 6

Fig. 7

Fig. 8

EP 2 825 849 B1

Fig. 9

EP 2 825 849 B1

Fig. 10

EP 2 825 849 B1

Fig. 11

EP 2 825 849 B1

Fig. 12

Fig. 13

Fig. 14

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120233077 A1
- US 20120109519 A1

- US 20120089329 A1

**Non-patent literature cited in the description**

- **M. SACHENBACHER ; M. LEUCKER ; A. ARTMEIER ; J. HASELMAYR.** Efficient energy-optimal routing for electric vehicles. *AAAI,* 2011

- Simultaneous vehicle routing and charging station siting for commercial electric vehicles. **O. WORLEY ; D. KLABJAN ; T. SWEDA.** Electric Vehicle Conference (IEVC). IEEE, 2012, 1-3